# EUROPÄISCHE PATENTSCHRIFT

(11) **EP 0 944 428 B1**
(45) Veröffentlichungstag und Bekanntmachung des Hinweises auf die Patenterteilung: **26.06.2013**
(21) Anmeldenummer: 97918968.5
(22) Anmeldetag: 07.08.1997
(51) Int. Cl.: B01D 53/94, F01N 3/08

(54) **Verfahren zum Betrieb einer Brennkraftmaschine mit einen NOx-Adsorber**
Method for operating an internal combustion engine with a NOx adsorber
Methode pour opérer un moteur à combustion interne

(30) Priorität: 19.08.1996 DE 19633050
(43) Veröffentlichungstag der Anmeldung: 29.09.1999
(73) Patentinhaber: Volkswagen Aktiengesellschaft, 38440 Wolfsburg (DE)
(72) Erfinder: HELD, Wolfgang, D-38448 Wolfsburg (DE)
(74) Vertreter: Pohlmann, Bernd Michael
(86) Internationale Anmeldenummer: PCT/EP1997/004306
(87) Internationale Veröffentlichungsnummer: WO 1998/007504

(56) Entgegenhaltungen:
- EP-A- 0 512 659
- EP-A- 0 540 280
- EP-A- 0 700 718
- EP-A- 0 716 876
- WO-A-95/21019
- US-A- 4 849 274
- PATENT ABSTRACTS OF JAPAN vol. 018, no. 563 (M-1693), 27.Oktober 1994 & JP 06 200738 A (TOYOTA MOTOR CORP), 19.Juli 1994,

## Beschreibung

Die Erfindung betrifft ein Verfahren zur Steuerung einer Verbrennungskraftmaschine.

Aus der US 4,755,499 ist die reversible Speicherung von Stickoxiden und Schwefeloxiden z. B. aus Abgasen von Kraftfahrzeugen bekannt, wobei der Absorber durch Erhitzen in einer reduzierenden Atmosphäre regeneriert wird. Hierbei tritt gleichzeitig eine Reduktion der Stickoxide ein.

Ein solcher Speicherkatalysator ist in der EP 0 580 389 A für den Einsatz bei Kraftfahrzeugen näher beschrieben, wobei auch hier hohe Temperaturen (über 500 °C) für die Regeneration des Absorbers notwendig sind. Hierdurch ist der Einsatz des Speicherkatalysators nur bei Kraftfahrzeugen möglich, die eine hohe Abgastemperatur haben, d. h. insbesondere bei Kraftfahrzeugen mit einem Otto-Motor. Jedoch ist auch hier der Einsatz nur bedingt möglich, da unter bestimmten Betriebsbedingungen der Verbrennungskraftmaschine, wie sie beispielsweise im Stadtverkehr gegeben sind, durch die Beschleunigungsphasen ein hoher Stickoxidausstoß erfolgt, nicht Jedoch lang anhaltend eine hohe Temperatur erreicht wird, die für die Regeneration des Absorbers, insbesondere von Schwefeloxiden, erforderlich ist.

Aus dem Dokument WO-A-95.21019 sind ein Verfahren und eine Vorrichtung zur Reduktion der NOx-/SOx- und CO-Emission einer Gasturbine, wie sie im stationären Betrieb einer Kranwerkserzeugung elektrischer Energie verwendet wird, bekannt. Hierzu wird ein Absorber verwendet, der zur Regeneration aus dem Abgasstrom entfernt und einer speziellen Behandlung unterzogen wird. Insbesondere wird in einer Ausführungsform das verbrauchte Karbonat, das zur Absorption der Schadstoffe dient, entfernt und der Absorber mit frischem Karbonat beschichtet. Ein derartiger Absorber ist für den Einsatz in einem Kraftfahrzeug mit direkt einspritzender Brennkraftmaschine ungeeignet.

Ferner ist aus dem Dokument EP-A-0.700.718 ein Absorber bekannt, der aus einer Keramik besteht und ebenfalls in stationären Kraftwerken eingesetzt wird. Der Absorber ist nicht zu einem Einsatz in einem Kraftfahrzeug geeignet. Insbesondere ist eine NOx-Absorption bei Sauerstoffüberschuss und Beisetzung von NOx in sauerstoffarmer Atmosphäre in diesem Dokument nicht beschrieben.

In dem Dokument EP-A-0.512.659 wird die Verwendung einer Metallfolie in einem katalytischen Konverter einer Brennkraftmaschine beschrieben. Es handelt sich dabei um einen üblichen katalydschen Konverter für den Betrieb mit Lambda=1, also ohne eine NOx-und/oder SOx-Speicherung.

Ferner ist aus dem Dokument EP-A-0.749.774 ein Drei-Wege-Katalysator bekannt, der in seiner zweiten Ausbildungsform einen monolythischen Träger mit Wänden einer Dicke zwischen 50 und 2000 µm aufweist. Da es sich hierbei um einen Drei-Wege-Katalysator handelt, ist eine Funktion als NOx-Speicherkatalysator ausgeschlossen.

Aus dem Dokument EP-A-0.585.572 ist ein Absorber mit einem Trägerkörper mit einer Wandstärke zwischen 0,1 und 0,6 mm bekannt, der jedoch nur für einen Lambda=1-Betrieb geeignet ist.

Aus der EP 0 540 280 A1 Ist bereits eine Brennkraftmaschine bekannt, die für den Betrieb mit einem mageren Luft- Kraftstoffverhältnis ausgelegt ist, also beim Betreiben einen sauerstoffhaltigen Abgasstrom erzeugt. Die Brennkraftmaschine ist mit einem Abgasstrang verbunden, sowie mit einem Absorber der Stickoxide zwischenspeichert und bei einer Verringerung des Sauerstoffüberschusses oberhalb einer bestimmten Temperatur, beispielsweise 500 °C wieder freigibt. Als Absorber kommt ein keramischer, gesinterter Cordierit-Trägerkörper in Betracht, der mit einer Absorptionsschicht auf der Basis eines Barium-Kupfer-Mischoxids beschichtet ist. Die Absorptionsschicht wird während des Betriebs der Brennkraftmaschine mittels einer im Abgasstrang befindlichen Heizvorrichtung auf die für die Freisetzung des Nox erforderliche Temperatur erhitzt. Im Fall der oben erwähnten Absorptionsschicht auf Ba-öCu-O Basis wird NOx bei Temperaturen oberhalb von etwa 500 °C desorbiert, während unterhalb dieses Temperaturbereichs Absorption erfolgt. Durch Vemvinderung des Sauerstoffgehalts im Abgas wird die Desorption des NOx gefördert. Eine Steuerungsvorrichtung sorgt für das zyklische Durchlaufen der Absorptlons- bzw. Desorptionsschritte.

Aufgabe der Erfindung ist es, das aus dem Stand der Technik bekannte Verfahren dahingehend zu verbessern, dass zum einen der Trägerkörper die starken Temperaturänderungen, die beim Erhitzen und Abkühlen des Absorbers auftreten, besonders rasch durchläuft, und dass zum anderen eine besonders hohe Speicherkapazität der Absorptionsschicht erzielbar ist. Es versteht sich von selbst, dass gleichzeitig eine gute thermische und chemische Lengzeitstabilität des NOx-Absorbers gewährleistet sein muss.

Die Aufgabe wird erfindungsgemäß mit den Merkmalen der unabhängigen Patentansprüche gelöst.

Die Unteransprüche zeigen bevorzugte Ausführungsformen, mit denen insbesondere auch bei sehr niedrigen Abgastemperaturen, wie sie beispielsweise bei direkteinspritzenden Dieselverbrennungskraftmaschinen vorliegen, ein Regenerieren des Absorbers ermöglicht ist.

Erfindungsgemäß können die üblichen absorbierenden Materialien eingesetzt werden, wie sie beispielsweise in der US 4,755,499, aber auch in der EP 0 580 389 A oder WO 94-04258 beschrieben sind. All diesen Speichermaterialien ist gemeinsam, daß sie eine erhöhte Arbeitstemperatur haben, wobei insbesondere beim Regenerieren (insbesondere beim Entfernen der Schwefeloxide) eine noch höhere Temperatur erforderlich ist Bei den meisten Speichermedien dieser Art werden Temperaturen im Bereich von 150 °C bis 700 °C, insbesondere Temperaturen oberhalb 300 °C benötigt. Solche Temperaturen treten bei Kraftfahrzeugen mit Otto-Motoren üblicherweise auf, sind jedoch bei Dieselkraftfahrzeugen und insbesondere bei direkteinspritzenden Verbrennungskraftmaschinen verhältnismäßig selten.

Die bevorzugten NOx-Speichermaterialien zeichnen sich also dadurch aus, daß sie unter nettooxidierenden Bedingungen (stöchiometrischer Überschuß an Oxidationsmitteln), wie sie im Abgas von Mager-Motoren vorliegen, Stickoxide Zwischenspeichern und bei einer Verringerung des Sauerstoffüberschusses reduzieren können. Hierzu sind die NOx-Speicherkatalysatoren üblicherweise auch edelmetallbeschichtet, insbesondere mit den üblichen Edelmetallbeschichtungen für Dreiwegekatalysatoren. Die Regeneration des mit NOx beladenen Speichermaterials erfolgt dann vorteilhaft bei λ ≤ 1 in einer Regenerierphase.

Üblicherweise laufen an den NOx-Speicherkatalysatoren verschiedene Reaktionen nacheinander bis gleichzeitig ab, wobei die wichtigsten Reaktionen
- Oxidation des NO im Abgas zur NO₂
- Speicherung des NO₂ als Nitrat
- Zersetzung des Nitrats
- Reduktion des zurückgebildeten NO₂ zu Stickstoff und Sauerstoff
sind.

Wie oben beschrieben, ist der Verlauf der Reaktionen unter anderem abhängig von der Temperatur des Katalysators, aber auch von der Konzentration der Reaktionspartner am aktiven Zentrum des Katalysators und der Strömungsgeschwindigkeit des Gases.

Erfindungsgemäß hat es sich nun gezeigt, daß mit verschiedenen Faktoren, die miteinander kombinierbar sind, es auch mit nur geringem Aufwand möglich ist, die bekannten Abgasabsorber zu optimieren, so daß sie insbesondere für direkteinspritzende Verbrennungskraftmaschinen und Dieselbrennkraftmaschinen eingesetzt werden können. Die wesentlichen Merkmale sind hierbei:
- Verringerung der Wandstärke des Trägerkörpers, auf dem die Absorptionsschicht aufgebracht ist, auf ≤ 160 µm, insbesondere ≤ 140 µm;
- Verwendung von Metallträgern, vorteilhaft mit einer Wandstärke ≤ 50 µm, vorzugsweise ≤ 40 µm und insbesondere ≤ 30 µm; und/oder
- Heizen des Absorbers auf eine Temperatur oberhalb der Temperatur des Abgasstromes.

Erfindungsgemäß hat es sich gezeigt, daß bei der Verwendung dünnwandiger keramischer Träger für die Absorptionsschicht, d. h. insbesondere von Trägerkörpern mit einer Wandstärke ≤ 0,14 mm, nicht nur ein schnellerer Temperaturanstieg der Absorptionsschicht möglich ist, sondern auch eine dickere Absorptionsschicht eingesetzt werden kann. Hierdurch wird zweierlei erreicht: zum einen können auch kurze Hochtemperaturphasen zum Regenerieren ausgenutzt werden, da die Speicherschicht schneller die höhere Temperatur annimmt, und zum anderen kann durch Auftragen einer dickeren Absorptionsschicht eine höhere Speicherkapazität erreicht werden, so daß über die längere Speicherfähigkeit des Absorbers beim Betrieb der Verbrennungskraftmaschine eine längere Zeitspanne verstreichen kann, bis der Speicher zu Regenerieren ist, so daß trotz der seltener auftretenden Temperaturspitzen im Abgasstrom von verbrauchsoptimierten Verbrennungskraftmaschinen kein Durchschlagen des Speichers (Erreichen der Sättigungsgrenze) erfolgt.

Erfindungsgemäß sind insbesondere Absorber mit einem Trägerkörper aus Metallfolie geeignet, wobei die Metallfolie vorteilhaft noch als Widerstandsheizung geschaltet werden kann, so daß auch bei niedrigen Abgastemperaturen der Absorber auf die notwendige Regenerationstemperatur durch Leiten eines elektrischen Stromes durch den Metallträgerkörper gebracht werden kann. Außerdem lassen sich bei der Verwendung eines Metallträgerkörpers die Kanäle, die mit der Absorptionsschicht beschichtet sind, unterschiedlich gestalten, so daß beispielsweise eine Verwirbelung (turbulente Strömung) des Abgasstromes in den Kanälen gezielt einstellbar ist.

Besonders vorteilhaft werden erfindungsgemäß für den Absorber Trägerkörper mit unterschiedlichen Kanalabschnitten eingesetzt, wobei z. B. ein mittlerer Bereich der Kanäle zur Erzielung einer turbulenten Strömung verändert ist. Dies ist beispielsweise durch eine Veränderung des Kanalquerschnitts oder aber durch eine Verdrehung bzw. Verwindung der Kanäle möglich. Hierdurch läßt sich der Trägerkörper gezielt für besonders günstige Reaktionsbedingungen entlang der Strömungskanäle anpassen. Eine weitere Besonderheit des Trägerkörpers ist neben der möglichen unterschiedlichen Zahl an Kanälen in Strömungsrichtung und dem Einbringen von Querschnittsänderungen entlang der Strömungsrichtung auch das Segmentieren des Trägerkörpers, wobei z. B. ein Segment mit Absorptionsschicht nahe des Motorauslasses und ein weiteres Segment mit Absorptionsschicht etwas entfernter angeordnet wird. Hierdurch lassen sich auch bei unterschiedlichsten Fahrbedingungen auch bei verbrauchsoptimierten Motoren gute NOx-Reinigungswerte erzielen.

Erfindungsgemäß hat es sich gezeigt, daß der NOx-Speicher besonders gute Absorptions-und Desorptionseigenschaften hat, wenn die Strömungskanäle für das Abgas in einem mittleren Bereich zur Erzielung einer turbulenten Strömung verwirbelt sind, wohingegen der Einlaßbereich und der Auslaßbereich nicht diese eine turbulente Strömung besonders begünstigende Struktur haben. Als einfachstes Mittel zur Erzeugung einer solchen turbulenten Strömung ist beispielsweise ein Übergang von einem großen zu einem kleinen Durchmesser in den Kanälen, jedoch auch eine Verdrehung des gesamten Körpers in diesem Bereich ist geeignet zur Erzeugung der Turbulenzen. Die besonders günstigen Eigenschaften werden vermutlich durch eine Trennung der einzelnen Reaktionsschritte zur Stickoxidreduktion auf einzelne Segmente des Trägerkörpers erreicht, wobei der veränderte mittlere Bereich gegenüber dem unveränderten mittleren Bereich bessere Reaktionsbedingungen gewährleistet.

Für die Erzielung besonders guter Umsätze hat die Absorptionsschicht eine vergrößerte Oberfläche von mindestens 20 m²/g, insbesondere mindestens 40 m²/g. Vorteilhaft hat die Absorptionsschicht vorzugsweise ein Porenvolumen von mindestens 0,2 cm³/g und insbesondere mindestens 0,4 cm³/g, wobei auch eine bimodale Porengrößenverteilung geeignet ist mit Mikroporen und Makroporen. Dies wird beispielsweise durch die Wahl einer bestimmten Partikelgröße für die Bildung der Absorberoberfläche erreicht, wobei auch Mischungen oder bestimmte Verteilungen unterschiedlicher Partikelgrößen geeignet sind.

Als Absorptionsoberfläche eignet sich insbesondere γ-Aluminiumoxid, das mit einem oder mehreren Elementen aus der Gruppe der Alkalimetalle, Erdalkalimetalle, seltenen Erden und/oder Lanthan beladen ist. Auch Kupfer und Mangan sind geeignete Elemente. Die Elemente liegen üblicherweise als Oxid, aber auch als Carbonat oder Nitrat vor, wobei die Speicherwirkung durch Bildung entsprechender Nitrate und Sulfate erzielt wird, die dann unter den entsprechenden Reaktionsbedingungen wieder zu Oxiden oder Carbonaten überführt werden. Hierdurch ist es möglich, NOx und/oder SOx insbesondere aus einem Abgas, das mindestens 1 % Sauerstoff enthält, zu absorbieren.

Wie beschrieben, werden die absorbierten Stoffe insbesondere durch erhöhte Temperaturen und in reduzierender Atmosphäre wieder freigesetzt. Hierzu ist es vorteilhaft, wenn im Abgas die Sauerstoffkonzentration ermittelt wird, wobei dann die Sauerstoffkonzentration oder eine mit der Sauerstoffkonzentration in bekannter Beziehung stehende Größe zur Steuerung des Absorptions- bzw. Desorptionsvorganges herangezogen werden kann. Entsprechendes gilt auch für die Temperatur des Abgasstroms, wobei entscheidend die Temperatur der Absorptionsschicht ist, die unmittelbar oder mittelbar bestimmt wird. So kann die Temperatur beispielsweise durch Messung der Temperatur des Abgasstroms bzw. des Trägerkörpers gemessen werden; auch eine Temperaturbestimmung über ein Kennfeld der Verbrennungskraftmaschine ist möglich.

Mit der vorliegenden Erfindung lassen sich Absorptionsschichten in einer Dicke von mindestens 50 µm, insbesondere mindestens 70 µm und besonders vorteilhaft mindestens 90 µm herstellen (durchschnittliche Schichtdicke eines Querschnitts; Werte gelten für Keramik, bei Metall gelten die halben Werte) wobei sich diese Schichtdicke der Absorptionsschicht über vorzugsweise mindestens 50 % und insbesondere mindestens 80 % des Absorbers erstreckt. Solche Schichtdicken ermöglichen gegenüber den herkömmlichen Absorbern eine höhere Speicherkapazität und damit die oben beschriebenen längeren Intervalle bis zur Regeneration.

Gemäß dem mit zur Erfindung gehörenden Verfahren kann das Regenerieren vorteilhaft dann erfolgen, wenn die Betriebsbedingungen der Verbrennungskraftmaschine eine entsprechend hohe Temperatur des Abgasstroms und damit der Absorptionsschicht bewirken. Ganz besonders vorteilhaft ist jedoch eine erfindungsgemäße Verfahrensweise, bei der eine Zusatzheizung der Absorptionsschicht vorgesehen ist, die insbesondere elektrisch erfolgt. Andere Beheizungsmaßnahmen sind Zündungsmaßnahmen (bei Otto-Motoren), Veränderung des λ, Absenken des λ, auf < 1 und Senkundärluftzugabe zum Erzeugen von Exothermie an einem Oxidationskatalysator bzw. über eine Zündeinrichtung sowie Beheizen des Katalysators durch einen Brenner. Besonders vorteilhaft ist hierbei wieder ein segmentierter Absorber, der dann reaktionsspezifisch beheizt wird. So kann beispielsweise nur ein stromabwärts angeordneter Absorberbereich beheizt werden, insbesondere bei einer deutlichen räumlichen Trennung der Absorbersegmente (siehe oben). Auch hier ist die elektrische Beheizung wieder besonders vorteilhaft, aber auch eine Kraftstoffeinspritzung in den Abgasstrom bzw. ein Brenner. Durch die Anordnung einzelner Segmente für Einzelreaktionen in unterschiedlichem Abstand zum Auslaßventil in motornaher und motorferner Position läßt sich außerdem eine thermische Alterung des Absorbers vermindern (neben dem Vorteil der besonders günstigen Reaktionstemperaturen in einzelnen Absorberbereichen).

Ferner kann über die Beheizung des Absorbers (insbesondere elektrisch oder mittels eines Brenners) eine Rußablagerung am Absorber aufgelöst werden, die ansonsten die Speicherfähigkeit deutlich herabsetzen würde. Hierzu wird vorzugsweise die Einstellung von λ ≤ 1 im Abgasstrom erst nach einem Abbrennen des Russes vorgenommen.

Da für die Freisetzung und Umsetzung des NOx aus dem Speicher und die Freisetzung der Schwefeloxide aus dem Speicher unterschiedliche Temperaturen notwendig sind (beim letzteren höhere), kann außerdem so verfahren werden, daß eine Desorption der Schwefeloxide (die insbesondere als Sulfat vorliegen) in größeren Zeitspannen bzw. bei Bedarf vorgenommen wird, so daß der Speicher nur gelegentlich auf die hohen Temperaturen erhitzt wird, die für eine Desorption der Schwefeloxide notwendig sind. Auch hierdurch wird einer frühzeitigen Alterung des Speichers entgegengewirkt, so daß eine besonders gute Langzeitstabilität des Absorbers erreicht wird. Im übrigen bedient sich das Verfahren der oben bei dem Absorber und im Ausführungsbeispiel beschriebenen Maßnahmen, wie auch die beim Verfahren und im Ausführungsbeispiel beschriebenen Merkmale bei dem eingangs beschriebenen Absorber eingesetzt werden können.

Die Erfindung wird im folgenden anhand eines Ausführungsbeispiels und einer Zeichnung näher beschrieben.

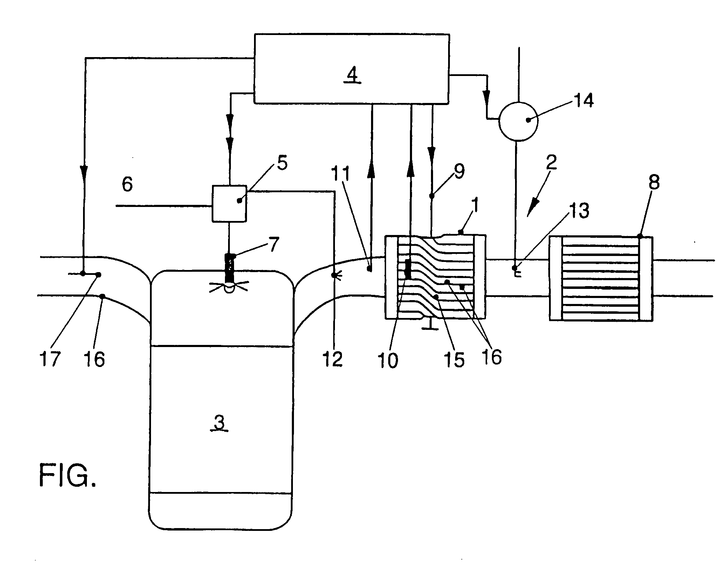

Die Zeichnung zeigt den Absorber in einem Abgassystem einer Brennkraftmaschine.

Ein Absorber 1 sitzt in einem Abgasstrang 2 einer Verbrennungskraftmaschine 3, deren Betrieb über ein Motormanagement gesteuert wird. Das Motormanagement 4 wirkt hierzu auf eine Einspritzpumpe 5, die Kraftstoff von einem (nicht dargestellten) Tank 6 zu einer Einspritzdüse 7 fördert. Übersichtshalber sind die verschiedensten zu dem Motormanagement 4 führenden üblichen Zu- und Ableitungen nicht dargestellt.

In dem Abgasstrang 2 ist ferner noch ein Dreiwegekatalysator 8 stromabwärts von dem Absorber 1 angeordnet, auch eine Anordnung des Dreiwegekatalysators 8 stromaufwärts des Absorbers 1 ist möglich.

Der Absorber 1 ist aus zwei Metallfolien aufgebaut, von denen die eine gewellt mit einer glatten Folie verbunden (an den Wellenbergen verlötet) ist. Durch Zusammenrollen dieser mehrlagigen Folie erhält man einen zylindrischen Körper mit einer Vielzahl von sich in ihm axial erstreckenden Kanälen. Ferner wurde der Trägerkörper des Absorbers in einem mittleren Bereich 15 um seine Längsachse gedreht, so daß hier die einzelnen Kanäle 16 verengt und gewunden sind. Eine ähnlich wirkende Turbulenzen bildende Struktur läßt sich auch mit einer Querwellung in einer oder beiden der Metallfolien erreichen.

Die Metallfolie enthält wenige Prozent Aluminium und wird anoxidiert, damit ein γ-aluminiumoxidhaltiger washcoat besser auf der Metallfolie haftet. Der Aluminiumoxidwashcoat enthält ferner die Elemente Natrium, Barium, Cer und Lanthan, die als Salze (Nitrate, Oxide, Hydrooxide) auf das Aluminiumoxid aufgezogen sind. Durch Tränken des gewickelten Trägerkörpers mit dem washcoat und anschließendes Brennen erhält man den Absorber. Zusätzlich wird der Absorber mit einer platin- und rhodiumhaltigen Lösung (zusätzlich oder anstatt des Rhodiums kann die Lösung auch Palladium enthalten) getränkt, aus der dann die entsprechenden Edelmetalle als solche freigesetzt werden. Diese Edelmetallbeschichtung entspricht einer Dreiwegekatalysator-Beschichtung. Der so erhaltene Absorber wird elektrisch kontaktiert und so in ein Gehäuse eingesetzt, daß ein Stromfluß durch ihn gegen Masse (das Gehäuse) möglich ist. Die elektrische Kontaktierung 9 ist anderenends mit der Steuerung 4 verbunden. Außerdem ist in den Trägerkörper noch ein Temperaturfühler 10 eingesetzt, der ebenfalls zu der Steuerung 4 führt.

Stromaufwärts von dem Absorber 1 ist eine Breitbandlambdasonde 11 in das Abgasrohr eingesetzt, die wiederum ihre der im Abgasstrom vorliegenden Sauerstoffkonzentration proportionalen Werte an die Steuerung 4 weitergibt. Außerdem ist stromaufwärts der Lambdasonde 11 eine Kraftstoffeinspritzung 12 vorgesehen, die entsprechend von Steuerbefehlen aus der Steuerung 4 mit Kraftstoff versorgt wird. Zwischen dem Absorber 1 und dem nachgeschalteten Katalysator 8 ist eine Lufteindüsung 13 vorgesehen, die Luft von einer von der Steuerung 4 gesteuerten Pumpe 14 erhält.

Die Verbrennungskraftmaschine 3 ist vom Typ eines direkteinspritzenden Dieselmotors, dessen Abgasstrom normalerweise einen hohen Sauerstoffüberschuß und eine Temperatur um 200 °C bis 400 °C hat.

Im Betrieb der Brennkraftmaschine werden im Abgas vorhandene Stickoxide und Oxide des Schwefels in der Absorptionsschicht des Absorbers 1 eingelagert, wobei gleichzeitig eventuell vorhandene oxidierbare Bestandteile (meist Kohlenwasserstoffe) durch die Edelmetallbeschichtung des Absorbers 1 oxidiert werden. Bei Erreichen der Sättigungsgrenze oder aber in vorbestimmten Zeitintervallen (auch andere Steuerungsgrößen sind möglich, wie beispielsweise eine NOx-Bestimmung im Abgas nach dem Absorber) ist der Absorber zu regenerieren d. h. von dem beispielsweise als Bariumnitrat eingelagerten NOx zu befreien. Gleichzeitig können hierbei auch (beispielsweise als Bariumsulfat) eingelagerte Oxide des Schwefels entfernt werden. Hierzu wird von dem Steuergerät 4 über den Temperaturfühler 10 geprüft, ob die Temperatur der Absorberbeschichtung für ein Regenerieren hoch genug ist. Sofern die Temperatur unter 500 °C liegt, wird über die Kraftstoffeindüsung 12 in den Abgasstrom Kraftstoff eingedüst, der mit dem im Abgasstrom vorhandenen Sauerstoff katalytisch an der Edelmetallbeschichtung des Absorbers 1 verbrennt, wodurch sich dessen Temperatur erhöht. Alternativ und/oder zusätzlich kann der metallische Trägerkörper des Absorbers 1 über einen Stromfluß (durch 9) elektrisch erhitzt werden (auch andere Temperaturerhöhungen, wie beispielsweise eine induktive Erhitzung des metallischen Trägerkörpers und/oder eine Abgasdrosselung sind möglich).

Sobald der Absorber 1 genügen erhitzt ist, wird ein fettes Gemisch im Abgas eingestellt, d. h. weiterhin Kraftstoff (über 12) eingedüst. Hierbei wird vorteilhaft im Ansaugkanal 16 der Brennkraftmaschine 3 eine Drossel 17 über die Steuerung 4 geschlossen, so daß weniger Luft in die Verbrennungskraftmaschine 3 gelangt. Hierdurch reduziert sich der Sauerstoffanteil im Abgasstrom derart, daß das NOx und SOx aus der Absorptionsschicht freigegeben und das NOx auch gleich reduziert wird. Das Ende des Regenerierens kann zeitgesteuert ablaufen aber auch beispielsweise über die Exothermie der Reaktionstemperatur kontrolliert. In einer weiteren Ausgestaltung kann das Regenerieren, wie in der DE 43 42 062 A beschrieben, erfolgen, d. h. der Abgasstrom wird vor dem Absorber gedrosselt und insbesondere in einen Bypaß zum Absorber geführt.

Um eventuell noch vorhandene Kohlenwasserstoffe abzubauen, ist nach dem Absorber 1 die Lufteindüsung 13 vorgesehen, die während der Kraftstoffeindüsung (über 12) von der Steuerung 4 in Betrieb gesetzt wird. Hierdurch werden eventuell noch vorhandene Kohlenwasserstoffe in dem nachgeschalteten Katalysator 8 zu Kohlendioxid und Wasser oxidiert.

Beim Einsatz einer Wirbelkammer-Dieselbrennkraftmaschine kann der Aufbau prinzipiell übernommen werden, bei direkteinspritzenden Otto-Motoren kann die Drosselung 17 wie auch die Kraftstoffeindüsung 12 entfallen, da hier über die Kraftstoffeinspritzung 7 in den Brennraum der Brennkraftmaschine ohne Schwierigkeiten eine genügende Anfettung des Abgasstromes erreicht werden kann. Grundsätzlich ist jedoch auch hier der Betrieb wie bei einer Dieselbrennkraftmaschine möglich.

Da beim Regenerieren die Leistung der Brennkraftmaschine 3 vermindert sein kann, können Maßnahmen vorgesehen werden, daß bei einem völligen Durchtreten des Gasstellmittels für die Brennkraftmaschine das Regenerieren zumindest für einen gewissen Zeitraum unterdrückt wird.

## Patentansprüche

1. Verfahren zum Betrieb einer Brennkraftmaschine mit den Schritten
- Betreiben der Brennkraftmaschine unter Bildung eines sauerstoffhaltigen Abgasstromes;
- Speichern des NOx mit der Absorptionsschicht;
- Erhitzen der Absorptionsschicht auf eine Temperatur von mindestens 500°C während des Betriebs der Brennkraftmaschine vor, gleichzeitig oder nach Bilden eines sauerstoffarmen Abgasstroms bzw. eines Abgasstroms mit einem stöchiometrischen Überschuss an Reduktionsmittel;
- Desorbieren des NOx unter Reduktion des NOx in dem sauerstoffarmen Abgasstrom bzw. in dem Abgasstrom mit einem stöchiometrischen Überschuss an Reduktionsmittel während dle Absorptionsschicht die Temperatur von mindestens 500°C hat;
- Bilden wieder eines sauerstoffhaltigen Abgasstroms;
- Beenden des Erhitzens der Absorptionsschicht auf die Temperatur von mindestens 500°C vor, gleichzeitig oder nach dem vorher genannten Schritt; und
- Wiederholen der Schritte ab: Speichern des NOx mit der Absorptionsschicht,
wobei die Brennkraftmaschine, insbesondere fremdgezündete Brennkraftmaschine oder Diesel-Brennkraftmaschine, einen Abgasstrang (2) umfasst, in dem ein Absorber (1) mit einem Trägerkörper angeordnet ist, auf dem eine Absorptionsschicht aufgebracht ist, die unter netto oxidierenden Bedingungen, wie sie im Abgas von Mager-Motoren vorliegen, Stickoxide (NOx) zwischenspeichern und bei einer Verringerung des Sauerstoffüberschusses und einer Temperatur von mindestens 500°C reduzieren kann, wobei ein keramischer Trägerkörper mit einer Wandstärke < 0,14 mm vorhanden ist.

2. Verfahren nach Anspruch 1 **dadurch gekennzeichnet, dass** die Absorptionsschlcht Schwefeloxide (SOx) bei erhöhter Temperatur freisetzt.

3. Verfahren nach zumindest einem der vorhergehenden Ansprüche, **dadurch gekennzeichnet, dass** die Absorptionsschicht mindestens ein Edelmetall trägt.

4. Verfahren nach Anspruch 3, **dadurch gekennzeichnet, dass** die Absorptionsschicht mit dem Edelmetall einen Oxidationskatalysator bzw. einen Drei-Wege-Katalysator bildet.

5. Verfahren nach zumindest einem der vorhergehenden Ansprüche, **dadurch gekennzeichnet, dass** die Absorptionsschicht in einem washcoat ist.

6. Verfahren nach zumindest einem der vorhergehenden Ansprüche, **dadurch gekennzeichnet, dass** die Absorptionsschicht mindestens eine Dicke von 50 µm aufweist.

7. Verfahren nach Anspruch 6, **dadurch gekennzeichnet, dass** sich die Schichtdicke der Absorptionsschicht über mindestens 50 %, insbesondere mindestens 80 % des Absorbers erstreckt.

8. Verfahren nach Anspruch 7, **dadurch gekennzeichnet, dass** der Trägerkörper Strömungskanäle für das Abgas enthält, die die Absorptionsschicht aufweisen.

9. Verfahren nach Anspruch 8, **dadurch gekennzeichnet, dass** mehrere der Kanäle zumindest über einen Abschnitt eine den Gasstrom verwirbelnde Struktur haben.

10. Verfahren nach Anspruch 9, **dadurch gekennzeichnet, dass** die den Gasstrom verwirbelnde Struktur eine Querschnittsänderung und/oder eine Wellung und/oder eine Verwindung bzw. Krümmung der Kanäle ist.

11. Verfahren nach einem der Ansprüche 8 bis 10, **dadurch gekennzeichnet, dass** der Absorber in Segmente unterteilt ist.

12. Verfahren nach Anspruch 11, **dadurch gekennzeichnet, dass** die Segmente unterschiedliche Längen und/oder unterschiedliche Kanalquerschnitte und/oder unterschiedliche Zahlen an Kanälen haben und/oder mindestens 50 cm voneinander beabstandet sind.

13. Verfahren nach zumindest einem der vorhergehenden Ansprüche, dadurch gekenttzeichnet, dass der Absorber (1) eine Oberfläche mit mindestens 20 m²/g, insbesondere mindestens 40 m²/g und besonders vorteilhaft mindestens 100 m²/g hat, bezogen auf die von dem Gasstrom erreichbare Masse der Absorptionsschicht.

14. Verfahren nach zumindest einem der vorhergehenden Ansprüche, **dadurch gekennzeichnet, dass** die Absorptionsschicht ein Aluminiumoxid, insbesondere γ-Aluminiumoxid enthält.

15. Verfahren nach zumindest einem der vorhergehenden Ansprüche, **dadurch gekennzeichnet, dass** die Absorptionsschicht ein Element aus der Gruppe der Alkalimetalle, Erdalkalimetalle, seltenen Erden, Lanthan, Titan, Kupfer und / oder Mangan enthält.

16. Verfahren nach Anspruch 15, **dadurch gekennzeichnet, dass** die Absorptionsschicht mindestens eines der Elemente Barium, Natrium, Kalium enthält.

17. Verfahren nach zumindest einem der vorhergehenden Ansprüche, **dadurch gekennzeichnet, dass** eine Sauerstoffkonzentrations-Bestimmungseinrichtung, die die Sauerstoffkonzentration bzw. eine die Sauerstoffkonzentration enthaltende Größe ermittelt, und eine Steuerungseinrichtung vorgesehen ist, die die Sauerstoffkonzentration bzw. die diese enthaltende Größe als eine Eingangsgröße hat und ein Beladen bzw. Entladen des Absorbers veranlasst.

18. Verfahren nach zumindest einem der vorhergehenden Ansprüche **gekennzeichnet durch** eine Temperatur-Bestimmungseinrichtung, die die Temperatur bzw. eine die Temperatur enthaltende Größe des Gasstroms und/oder der Absorptionsschicht und/oder des Trägerkörpers ermittelt, und dass eine Steuerungseinrichtung vorgesehen ist, die die Temperatur bzw. die diese enthaltende Größe als Eingangsgröße hat und ein Beladen bzw. Entladen des Absorbers veranlasst.

19. Verfahren nach Anspruch 18, **dadurch gekennzeichnet, dass** die Steuerungseinrichtung die Sauerstoffkonzentration und die Temperatur bzw. die diese enthaltenden Größen als Eingangsgrößen hat.

20. Verfahren nach zumindest einem der vorhergehenden Ansprüche, **dadurch gekennzeichnet, dass** dem Absorber (1) ein Oxidationskatalysator, insbesondere ein Drei-Wege-Katalysator als eigenständige Einheit vor- und/oder nachgeschaltet ist.

21. Verfahren nach zumindest einem der vorhergehenden Ansprüche, **dadurch gekennzeichnet, dass** die Absorptionsschicht ein Porenvolumen von mindestens 0,2 cm³/g hat bezüglich der von dem Gasstrom anströmbaren Masse.

22. Verfahren nach einem der vorhergehenden Ansprüche, **dadurch gekennzeichnet, dass** das Erhitzen der Absorptionsschicht durch eine Kraftstoffeinspritzung in den Abgasstrom und insbesondere katalytische Verbrennung desselben und/oder durch Veränderung des Betriebszustandes der Brennkraftmaschine und/oder durch eine elektrische Beheizung der Absorptionsschicht und/oder durch eine Brennerbeheizung des Abgasstromes erreicht wird.

23. Verfahren nach einem der vorhergehenden Ansprüche, **dadurch gekennzeichnet, dass** vor dem Schritt:
- Erhitzen der Absorptionsschicht mindestens auf eine Temperatur von mindestens 500°C während des Betriebs der Brennkraftmaschine.
ein Schritt:
- Ermitteln, ob die Absorptlonsschicht und/oder eine in Temperaturbeziehung zu der Absorptionsschicht stehende Sache die Temperatur von mindestens 500°C hat,
durchgeführt wird, und dass die Schritte:
- Erhitzen der Absorptionsschicht auf eine Temperatur von mindestens 500°C während des Betriebs der Brennkraftmaschine, und
- Beenden des Erhitzens der Absorptionsschicht auf eine Temperatur von mindestens 500°C während des Betriebs der Brennkraftmaschine
entfallen, wenn bei dem Ermitteln festgestellt wird, dass die Absorptionsschicht und/oder die in Temperaturbeziehung zu der Absorptionsschicht stehende Sache die Temperatur von mindestens 500°C hat.

24. Verfahren nach einem der vorhergehenden Ansprüche, **dadurch gekennzeichnet, dass** neben NOx auch mindestens ein Oxid des Schwefels (SOx) während der Verfahrensschritte von der Absorptionsschicht gespeichert bzw. desorbiert wird.

25. Verfahren nach einem der vorhergehenden Ansprüche, **dadurch gekennzeichnet, dass** das Desorbieren zeit- und/oder beladungsabhängig von der Absorptionsschicht erfolgt.

26. Verfahren nach einem der vorhergehenden Ansprüche, **dadurch gekennzeichnet, dass** der Abgasstrom turbulent über die Absorptionsschicht geführt wird.

## Claims

1. Method for operating an internal combustion engine, with the steps
- operation of the internal combustion engine so as to form an oxygen-containing exhaust-gas stream;
- storage of the NOx by the absorption layer;
- heating of the absorption layer to a temperature of at least 500°C during the operation of the internal combustion engine before, simultaneously with or after the formation of a low-oxygen exhaust-gas stream or of an exhaust-gas stream having a stoichiometric excess of reducing agent;
- desorption of the NOx by the reduction of the NOx in the low-oxygen exhaust-gas stream or in the exhaust-gas stream with a stoichiometric excess of reducing agent while the absorption layer has the temperature of at least 500°C;
- reformation of an oxygen-containing exhaust-gas stream;
- termination of the heating of the absorption layer to the temperature of at least 500°C before, simultaneously with or after the abovementioned step; and
- repetition of the steps from storage of the NOx by the absorption layer,
the internal combustion engine, in particular spark-ignition internal combustion engine or diesel internal combustion engine, comprising an exhaust tract (2) in which is arranged an absorber (1) with a carrier body to which is applied an absorption layer which, under net oxidizing conditions, such as prevail in the exhaust gas of lean-burn engines, can intermediately store nitrogen oxides (NOx) and, in the case of a reduction in the oxygen excess and with a temperature of at least 500°C, can reduce these, a ceramic carrier body with a wall thickness 0.14 mm being present.

2. Method according to Claim 1, **characterized in that** the absorption layer releases sulphur oxides (SOx) at increased temperature.

3. Method according to at least one of the preceding claims, **characterized in that** the absorption layer carries at least one noble metal.

4. Method according to Claim 3, **characterized in that** the absorption layer having the noble metal forms an oxidizing catalyst or a three-way catalyst.

5. Method according to at least one of the preceding claims, **characterized in that** the absorption layer is in a wash coat.

6. Method according to at least one of the preceding claims, **characterized in that** the absorption layer has at least a thickness of 50 µm.

7. Method according to Claim 6, **characterized in that** the layer thickness of the absorption layer extends over at least 50%, in particular at least 80%, of the absorber.

8. Method according to Claim 7, **characterized in that** the carrier body contains flow ducts for the exhaust gas which have the absorption layer.

9. Method according to Claim 8, **characterized in that** a plurality of the ducts have, at least over a portion, a structure which swirls the gas stream.

10. Method according to Claim 9, **characterized in that** the structure swirling the gas stream is a change in cross section and/or a corrugation and/or a twisting or curving of the ducts.

11. Method according to one of Claims 8 to 10, **characterized in that** the absorber is subdivided into segments.

12. Method according to Claim 11, **characterized in that** the segments have different lengths and/or different duct cross sections and/or different numbers of ducts and/or are spaced at least 50 cm apart from one another.

13. Method according to at least one of the preceding claims, **characterized in that** the absorber (1) has a surface with at least 20 m²/g, in particular at least 40 m²/g and especially advantageously at least 100 m²/g, with respect to that mass of the absorption layer which can be reached by the gas stream.

14. Method according to at least one of the preceding claims, **characterized in that** the absorption layer contains an aluminium oxide, in particular γ-aluminium oxide.

15. Method according to at least one of the preceding claims, **characterized in that** the absorption layer contains an element from the group of alkali metals, alkaline earth metals, rare earths, lanthanum, titanium, copper and/or manganese.

16. Method according to Claim 15, **characterized in that** the absorption layer contains at least one of the elements barium, sodium or potassium.

17. Method according to at least one of the preceding claims, **characterized in that** an oxygen concentration determination device, which determines the oxygen concentration or a variable containing the oxygen concentration, and a control device, which has the oxygen concentration or the variable containing this as an input variable and causes the absorber to be loaded and discharged, are provided.

18. Method according to at least one of the preceding claims, **characterized by** a temperature determination device which determines the temperature or a variable containing the temperature of the gas stream and/or of the absorption layer and/or of the carrier body, and in that a control device is provided which has the temperature or the variable containing this as an input variable and causes the absorber to be loaded and discharged.

19. Method according to Claim 18, **characterized in that** the control device has the oxygen concentration and the temperature or the variables containing these as input variables.

20. Method according to at least one of the preceding claims, **characterized in that** the absorber (1) is preceded and/or followed by an oxidizing catalyst, in particular a three-way catalyst, as an independent unit.

21. Method according to at least one of preceding claims, **characterized in that** the absorption layer has a pore volume of at least 0.2 cm³/g with respect to the mass which can be reached by the flow of the gas stream.

22. Method according to one of the preceding claims, **characterized in that** the heating of the absorption layer is achieved by the injection of fuel into the exhaust-gas stream and, in particular, the catalytic combustion of the latter and/or by varying the operating state of the internal combustion engine and/or by the electrical heating of the absorption layer and/or by burner heating of the exhaust-gas stream.

23. Method according to one of the preceding claims, **characterized in that**, before the step:
- heating of the absorption layer at least to a temperature of at least 500°C during the operation of the internal combustion engine,
a step:
- determination of whether the absorption layer and/or an object standing in temperature relation to the absorption layer have/has the temperature of at least 500°C,
is carried out, and **in that** the steps:
- heating of the absorption layer to a temperature of at least 500°C during the operation of the internal combustion engine, and
- termination of the heating of the absorption layer to a temperature of at least 500°C during the operation of the internal combustion engine
are dispensed with when, during determination, it is established that the absorption layer and/or the object standing in temperature relation to the absorption layer have/has the temperature of at least 500°C.

24. Method according to one of the preceding claims, **characterized in that**, in addition to NOx, at least one oxide of sulphur (SOx) is also stored or desorbed by the absorption layer during the method steps.

25. Method according to one of the preceding claims, **characterized in that** the desorption takes place as a function of time and/or as a function of the load of the absorption layer.

26. Method according to one of the preceding claims, **characterized in that** the exhaust-gas stream is led turbulently over the absorption layer.

## Revendications

1. Procédé de conduite d'un moteur à combustion interne, le procédé comportant les étapes qui consistent à :
faire fonctionner le moteur à combustion interne avec formation d'un écoulement de gaz d'échappement contenant de l'oxygène,
accumuler les NOx à l'aide d'une couche d'absorption,
chauffer la couche d'absorption à une température d'au moins 500°C pendant le fonctionnement du moteur à combustion interne avant, en même temps que ou après la formation d'un écoulement de gaz d'échappement pauvre en oxygène ou d'un écoulement de gaz d'échappement qui présente un excès stoechiométrique d'agent réducteur,
désorber les NOx en réduisant les NOx contenus dans l'écoulement de gaz d'échappement pauvre en oxygène ou dans l'écoulement de gaz d'échappement présentant un excès stoechiométrique d'agent réducteur pendant que la couche d'absorption présente une température d'au moins 500°C,
reformer un écoulement de gaz d'échappement contenant de l'oxygène,
interrompre le chauffage de la couche d'absorption à la température d'au moins 500°C avant, en même temps que ou après l'étape ci-dessus et
répéter les étapes d'accumulation des NOx par la couche d'absorption,
le moteur à combustion interne, en particulier le moteur à combustion interne à allumage par étincelle ou le moteur à combustion interne diesel comportant un conduit (2) de gaz d'échappement dans lequel est disposé un absorbeur (1) doté d'un corps de support sur lequel est appliquée une couche d'absorption qui, dans les conditions oxydantes nettes qui règnent dans les gaz d'échappement de moteurs pauvres, accumule les oxydes d'azote (NOₓ) et peut les réduire à une température d'au moins 500°C par réduction de l'excès d'oxygène,
le corps de support étant un corps de support céramique dont la paroi a une épaisseur < 0,14 mm.

2. Procédé selon la revendication 1, **caractérisé en ce qu'**à température plus élevée, la couche d'absorption libère les oxydes de soufre (SOx).

3. Procédé selon au moins l'une des revendications précédentes, **caractérisé en ce que** la couche d'absorption porte au moins un métal précieux.

4. Procédé selon la revendication 3, **caractérisé en ce que** la couche d'absorption forme avec le métal précieux un catalyseur d'oxydation ou un catalyseur trois voies.

5. Procédé selon au moins l'une des revendications précédentes, **caractérisé en ce que** la couche d'absorption est un "washcoat".

6. Procédé selon au moins l'une des revendications précédentes, **caractérisé en ce que** la couche d'absorption présente une épaisseur d'au moins 50 µm.

7. Procédé selon la revendication 6, **caractérisé en ce que** l'épaisseur de la couche d'absorption s'étend sur au moins 50 % et en particulier sur au moins 80 % de l'absorbeur.

8. Procédé selon la revendication 7, **caractérisé en ce que** le corps de support contient des canaux d'écoulement pour le gaz d'échappement, les canaux présentant la couche d'absorption.

9. Procédé selon la revendication 8, **caractérisé en ce que** plusieurs des canaux présentent au moins sur une section une structure de tourbillonnage de l'écoulement de gaz.

10. Procédé selon la revendication 9, **caractérisé en ce que** la structure de tourbillonnage de l'écoulement de gaz est une modification de section transversale, une ondulation et/ou une torsion ou une courbure des canaux.

11. Procédé selon l'une des revendications 8 à 10, **caractérisé en ce que** l'absorbeur est divisé en segments.

12. Procédé selon la revendication 11, **caractérisé en ce que** les segmentes présentent différentes longueurs, différentes sections transversales de canal et/ou différents nombres de canaux, et/ou sont disposés à au moins 50 cm les uns des autres.

13. Procédé selon au moins l'une des revendications précédentes, **caractérisé en ce que** l'absorbeur (1) présente une surface qui contient au moins 20 m²/g, en particulier au moins 40 m²/g et de façon particulièrement avantageuse au moins 100 m²/g de la masse de la couche d'absorption qui peut être atteinte par l'écoulement de gaz.

14. Procédé selon au moins l'une des revendications précédentes, **caractérisé en ce que** la couche d'absorption contient un oxyde d'aluminium et en particulier un γ-oxyde d'aluminium.

15. Procédé selon au moins l'une des revendications précédentes, **caractérisé en ce que** la couche d'absorption contient un élément de l'ensemble formé des métaux alcalins, des métaux alcalinoterreux, des terres rares, du lanthane, du titane, du cuivre et/ou du manganèse.

16. Procédé selon la revendication 15, **caractérisé en ce que** la couche d'absorption contient au moins l'un des éléments baryum, sodium et potassium.

17. Procédé selon au moins l'une des revendications précédentes, **caractérisé en ce qu'**il prévoit un dispositif de détermination de la concentration en oxygène qui détermine la concentration en oxygène ou une grandeur qui contient la concentration en oxygène et un dispositif de commande qui reçoit comme grandeur d'entrée la concentration en oxygène ou la grandeur qui la contient et qui lance un chargement ou un déchargement de l'absorbeur.

18. Procédé selon au moins l'une des revendications précédentes, **caractérisé en ce qu'**il utilise un dispositif de détermination de température qui détermine la température ou une grandeur qui contient la température de l'écoulement de gaz, de la couche d'absorption et/ou du corps de support et un dispositif de commande qui reçoit comme grandeur d'entrée la température ou la grandeur qui la contient et qui lance un chargement ou un déchargement de l'absorbeur.

19. Procédé selon la revendication 18, **caractérisé en ce que** le dispositif de commande reçoit comme grandeurs d'entrée la concentration en oxygène et la température ou les grandeurs qui les contiennent.

20. Procédé selon au moins l'une des revendications précédentes, **caractérisé en ce qu'**un catalyseur d'oxydation, en particulier un catalyseur trois voies, est raccordé en amont ou en aval de l'absorbeur (1) sous la forme d'une entité autonome.

21. Procédé selon au moins l'une des revendications précédentes, **caractérisé en ce que** la couche d'absorption présente un volume de pores d'au moins 0,2 cm³/g de la masse qui peut être balayée par l'écoulement de gaz.

22. Procédé selon l'une des revendications précédentes, **caractérisé en ce que** le chauffage de la couche d'absorption est obtenu par injection de carburant dans l'écoulement de gaz d'échappement et en particulier combustion catalytique de ce carburant, par modification de l'état de fonctionnement du moteur à combustion interne, par chauffage électrique de la couche d'absorption et/ou par chauffage de l'écoulement de gaz d'échappement au moyen d'un brûleur.

23. Procédé selon l'une des revendications précédentes, **caractérisé en ce qu'**avant l'étape de chauffage de la couche d'absorption à une température d'au moins 500°C pendant que le moteur à combustion interne est en fonctionnement, une étape consistant à :
déterminer si la couche d'absorption et/ou quelque chose en relation de température avec la couche d'absorption à la température d'au moins 500°C est exécutée et **en ce que** les étapes qui consistent à :
chauffer la couche d'absorption à une température d'au moins 500°C pendant que le moteur à combustion interne est en fonctionnement et
interrompre le chauffage de la couche d'absorption à une température d'au moins 500°C pendant que le moteur à combustion interne est en fonctionnement sont supprimées si, après la détermination, il est constaté que la couche d'absorption et/ou la chose en relation de température avec la couche d'absorption présentent une température d'au moins 500°C.

24. Procédé selon l'une des revendications précédentes, **caractérisé en ce qu'**en plus des NOx, au moins un oxyde de soufre (SOx) est accumulé ou désorbé par la couche d'absorption pendant les étapes du procédé.

25. Procédé selon l'une des revendications précédentes, **caractérisé en ce que** la désorption s'effectue en fonction du temps et/ou en fonction de la charge de la couche d'absorption.

26. Procédé selon l'une des revendications précédentes, **caractérisé en ce que** l'écoulement de gaz d'échappement est amené en conditions turbulentes sur la couche d'absorption.
